# EUROPÄISCHE PATENTSCHRIFT

(11) **EP 2 270 621 B1**
(45) Veröffentlichungstag und Bekanntmachung des Hinweises auf die Patenterteilung: **19.08.2015**
(21) Anmeldenummer: 10166819.2
(22) Anmeldetag: 22.06.2010
(51) Int. Cl.: F01P 11/02, G05D 23/13, G05D 23/02

(54) **Längsschieber-Thermostatventil**
Longitudinal sliding thermostatic valve
Soupape thermostatique à coulisseau longitudinal

(30) Priorität: 23.06.2009 DE 102009030237
(43) Veröffentlichungstag der Anmeldung: 05.01.2011
(73) Patentinhaber: Behr Thermot-tronik GmbH, 70806 Kornwestheim (DE)
(72) Erfinder: Auweder, Andreas, 71665 Vaihingen/Enz (DE); Hiller, Bert, 71384 Weinstadt (DE)
(74) Vertreter: Grauel, Andreas

(56) Entgegenhaltungen:
- EP-A1- 1 942 257
- EP-A2- 0 985 808
- DE-A1-102004 009 917

## Beschreibung

Die Erfindung betrifft ein Längsschieber-Thermostatventil in 3/2-Wegeventilbauweise für einen Kühlmittelkreislauf eines Verbrennungsmotors, mit einer Thermostateinatz-Baugruppe, die einen topfförmigen Schieber umfasst, der relativ zu einem Gehäusekörper gegen die Wirkung einer Rückstellfeder hin und her bewegbar geführt und durch eine Führungstraverse mit einem Dehnstoffarbeitselement gekoppelt ist.

Aus der deutschen Offeniegungsschrift DE 10 2004 009 917 A1 ist ein Thermostatventil begannt, das als Tellerthermostat ausgeführt und zwischen zwei Gehäuseteilen anzuordnen ist. Das bekannte Thermostaiventil weist ein thermostatisches Arbeitselement auf, das mit einer Rückstellfeder belastet ist. Zum Abstutzen der Rückstellfeder ist eine Traverse vorgesehen, die einteilig mit einem Ringflansch ausgebildet ist, der zwischen den Gehäuseteilen einspannbar ist.

Das Dokument EP 1 942 257 A1 zeigt ebenfalls einen relevanten Stand der Technik.

Aufgabe der Erfindung ist es, ein Längsschieber-Thermostatventil gemäß dem Oberbegriff des Anspruchs 1 zu schaffen, das einfach aufgebaut und kostengünstig herstellbar ist.

Die Aufgabe ist bei einem Längsschieber-Thermostatventil in 3/2-Wegeventilbauweise für einen Kühlmittelkreislauf eines Verbrennungsmotors, mit einer Thermostateinsatz-Baugruppe, die einen topfförmigen Schieber umfasst, der relativ zu einem Gehäusekörper gegen die Wirkung einer Rückstellfeder hin und her bewegbar geführt und durch eine Führungstraverse mit einem Dehnstoffarbeitsekement gekoppelt ist, dadurch gelöst, dass die Führungstraverse an einem separaten Führungszapfen geführt ist, der an dem Gehäusekörper befestigt ist. Die Thermostateinsatz-Baugruppe ist zum Beispiel zum Einbau in eine Motorgehäuseteilöffnung oder Kühlergehäuseteilöffnung bestimmt, die durch den Gehäusekörper des Längsschieber-Thermostatvontils verschlossen wird. Der topfförmige Schieber ragt dann in die Motorgehäuseteilöffnung und ist zur Ausübung seiner Ventilfunktion gegen einen Anschlag an dem Gehauseteil bewegbar. In dem Motorgehauseteil oder Kühlergehäuseteil sind mindestens ein Motorkanal, der mit dem Motor in Verbindung steht, mindestens ein Kühlerkanal, der mit einem Kühler in Verbindung steht, und mindestens ein Kurzschlusskanal vorgesehen, der den Kühler umgeht beziehungsweise einen Kühlkreislauf des Motors kurzschließt. Die Thermostat-Einsatzbaugruppe kann auch in eine andere Gehäuseteilöffnung mit entsprechenden Kanälen eingebaut werden, Das Längsschieber-Thermostatventil mit in der Gehäuseteilöffnung angeordneter oder integrierter Thermostateinsatz-Baugruppe wird auch als Integralthermostat bezeichnet. Gemäß einem wesentlichen Aspekt der Erfindung ist der Führungszapfen als separates Bauteil ausgeführt. Das liefert den Vorteil, dass der Gehäusekörper aus einem kostengünstig verarbeitbaren Material, wie zum Beispiel Kunststoff, hergestellt werden kann.

Ein bevorzugtes Ausführurtgsbeispiel des Längsschieber-Thermostatventils ist **dadurch gekennzeichnet, dass** der Führungszapfen als Drehteil oder als Spritzgussteil ausgeführt ist. Das liefert den Vorteil, dass der Führungszapfen auf einfache Art und Weise mit diversen Gestaltungsmerkmalen ausgestattet werden kann.

Ein weiteres bevorzugtes Ausführungsbeispiel des Längsschieber-Thermostatventils ist **dadurch gekennzeichnet, dass** ein Ende des Führungszapfens an dem Gehäusekörper befestigt ist. Die Befestigung des Führungszapfens kann zum Beispiel durch Vernieten oder durch Verschrauben mit dem Gehäusekörper erfolgen.

Ein weiteres bevorzugtes Ausführungsbeispiel des Längsschieber-Thermostatventils ist **dadurch gekennzeichnet, dass** der Gehäusekörper als Gehäusedeckel ausgeführt ist. Der Gehäuseoeckel dient dazu, eine Gehäuseteilöffnung, in welche die Thermostateinsatz-Baugruppe eingebaut wird, nach außen hin zu verschließen.

Ein weiteres bevorzugtes Ausführungsheispiel des Längsschieber-Thermostatventils ist **dadurch gekennzeichnet, dass** der Führungszapfen in seinem dem Gehäusekörper abgewandten Ende ein Sackloch aufweist, in dem eine Überhubfeder aufgenommen ist. Die Überhubfeder dient dazu, im Betrieb des Längsschieber-Thermostatventils einen Überhub des Dehnstoffarbeitseiements abzufedern.

Ein weiteres bevorzugtes Ausführungsbeispiel des Längsschleber-Thermostatventils ist **dadurch gekennzeichnet, dass** die Überhubfeder gegen ein Kolbengegenlager für einen Kolben des Dehnstoffarbeitselements abgestützt ist. Die Überhubfeder ist in dem Sackloch des Führungszapfens vorzugsweise gegen das Kolbengegenlager vorgespannt.

Ein weiteres bevorzugtes Ausführungsbeispiel des Längsschieber-Thermostatventils ist **dadurch gekennzeichnet, dass** das Kolbengegenlager durch einen Sicherungsring in axialer Richtung in dem Sackloch des Führungszapfens gehalten ist. Bei dem Sicherungsring handelt es sich vorzugsweise um ein Normteil.

Ein weiteres bevorzugtes Ausführungsbeispiel des Längeschieber-Thermostatventils ist **dadurch gekennzeichnet, dass** die Führungstraverse mit ihrem dem Gehäusekörper abgewandten Ende das Dehnstoffarbeitselement umgreift. Das Dehnstoffarbeitselement ist vorzugsweise mit einer leichten Verpressung in die Führungstraverse eingesetzt.

Ein weiteres bevorzugtes Ausführungsbeispiel des Längsschieber-Thermostatventils ist **dadurch gekennzeichnet, dass** die Führungstraverse einen inneren Führungsabschnitt aufweist, mit dem die Führungstraverse an einem äußeren Führungsabschnitt des Führungszapfens geführt ist, Die Führungsabschnitte haben vorzugsweise jeweils die Gestalt von geraden Kreiszylindermanieln.

Ein weiteres bevorzugtes Ausführungsbeispiel des Längsschieber-Thermostatventils ist **dadurch gekennzeichnet, dass** die Führung nur über den Radialwellendichtring und/oder den Schieber erfolgt, so dass das Längsschieber-Thermostatventil ohne Führungsabschnitt auskommt.

Ein weiteres bevorzugtes Ausführungsbeispiel des Längsschieber-Thermostatventils ist **dadurch gekennzeichnet, dass** sich der innere Führungsabschnitt der Führungstraverse zwischen dem Dehnstoffarbeitselement und einem Bund erstreckt, der an dem Führungszapfen ausgebildet ist. Der Bund an dem Führungszapfen kann einen Anschlag für den Schieber insbesondere in Verbindung mit der vernieteten Führungstraverse, in axialer Richtung darstellen,

Ein weiteres bevorzugtes Ausführungsbeispiel des Längsschieber-Thermostatvenils ist **dadurch gekennzeichnet, dass** die Rückstellfeder zwisehen dem Bund des Führungszapfens und dem Schieber eingespannt ist. Der Bund kann vorteilhaft einen axialen Anschlag für die Führungstraverse darstellen.

Ein weiteres bevorzugtes Austuhrungsbeispiel des Längsschieber-Thermostatventils ist **dadurch gekennzeichnet, dass** der Führungszapfen an seinem dem Gehäusekörper zugewandten Ende einen Lagerzapfen aufweist, der sich durch ein Lagerdurchgangsloch erstreckt, das in dem Gehäusekörper vorgesehen ist. Dadurch wird auf einfache Art und Weise eine stabile Befestigung des Führungszapfens an dem Gehäusekörper ermöglicht.

Ein weiteres bevorzugtes Ausführungsbetspiel des Längsschieber-Therimostatventils ist **dadurch gekennzeichnet, dass** die Schnittstelle zwischen dem Lagerzapfen und dem Lagerdurchgangsloch des Gehäusekörpers durch einen O-Ring abgedichtet ist. Dadurch kann auf einfache Art und Weise eine statische Abdichtung zur Umgebung des Gehäusekörpers sichergestelit werden,

Ein weiteres bevorzugtes Ausführungsbeispiel des Längsschieber-Thermostatventils ist **dadurch gekennzeichnet, dass** die Führungstraverse mit dem Schieber vernietet ist, Vorzugsweise sind sowohl der Schieber als auch die Führungstraverse als Blechteile ausgeführt.

Ein weiteres bevorzugtes Ausführungsbeispiel des Längsschieeber-Thermostatventils ist **dadurch gekennzeichnet, dass** von der Führungstraverse Haltearme ausgehen, weiche das dem Gehäusekörper zugewandten Ende der Rückstellfeder umgreifen. Vorzugsweise gehen von der Führungstraverse zusätzliche Verbindungsarme aus, die einstückig mit dem Schieber verbunden sein können.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: ein erfindungsgemäßes Längsschieber-Thermostatventil im Längsschnitt in einem Mischbetriebszustand;
- Figur 2: das Thermostatventil aus Figur 1 in einem Kühlerbetriebszustand;
- Figur 3: ein ähnliches Thermostatventil wie in den Figuren 1 und 2 in einem Kurzschlussbetriebszustand gemäß einem weiteren Ausführungsbelspiel;
- Figur 4: eine perspektivische Darstellung des Thermostatventils aus den Figuren 1 bis 3;
- Figur 5: ein ähnliches Thermostatventil wie in Figur 4 gemäß einem weiteren Ausführungsbeispiel und
- Figur 6: ein ähnliches Thermostatventil wie in den Figuren 1 bis 5 gemäß einem weiterer Ausführungsbeispiel im Längsschnitt.

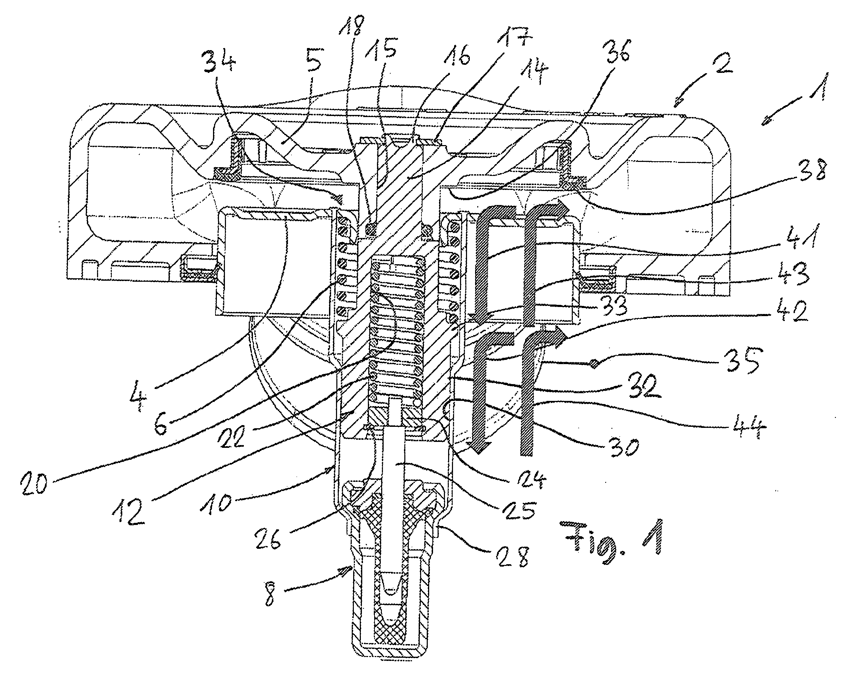

In den Figuren 1 bis 6 ist ein erfindungsgemäßes Längsschieber-Thermostatventil 1 mit einer Thermostateinsatz-Baugruppe 2 in verschiebenen Ansichten und Ausführungsbeisplelen dargestellt. Das Thermostatventil 1 umfasst einen als Längsschieber oder Ringschieber ausgebildeten Schieber 4, der relativ zu einem Gehäusekörper 5 und gegen die Rückstellkraft einer Rückstellfeder 6 in axialer Richtung bewegbar ist.

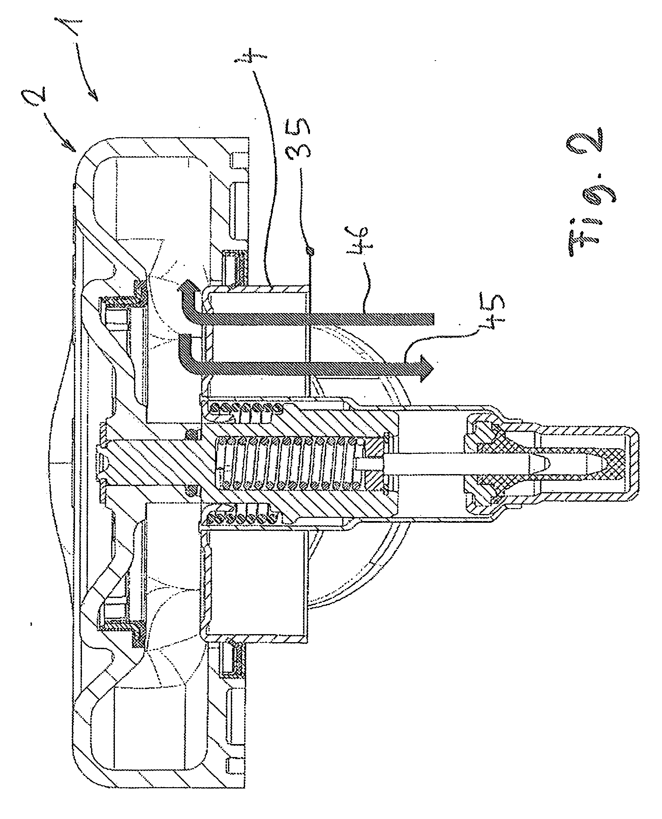

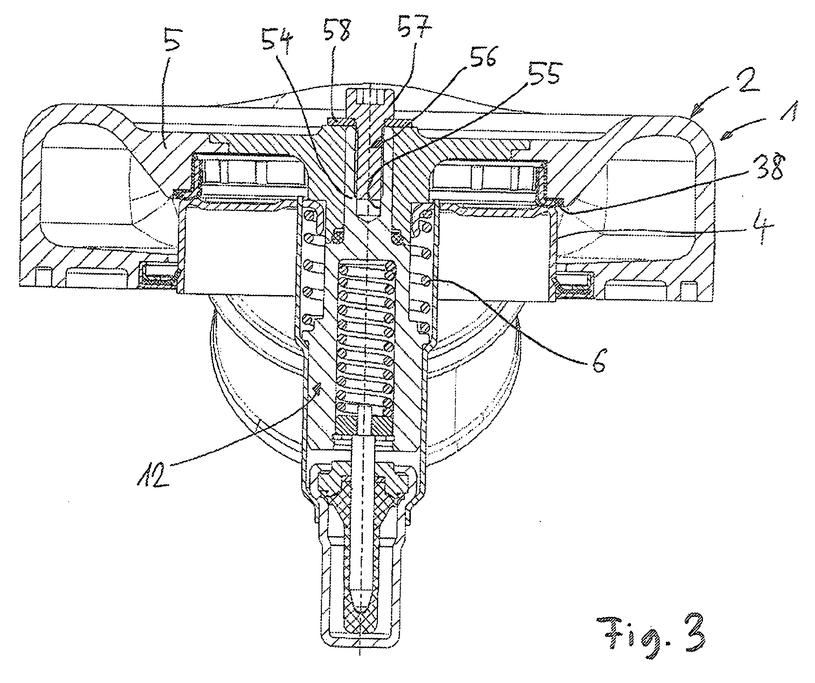

Der Schieber 4 ist topfartig ausgeführt und hat im Wesentlichen die Gestalt eines geraden Kreiszylindermantels, der an einer Stirnseite durch eine mit Durchbrüchen versehene Stirnwand abgeschlossen ist. Der Schieber 4 ist durch die Rückstellfeder 6 in seine in Figur 3 dargestellte Stellung vorgespannt, die auch als Kurzschlussbetriebsstellung bezeichnet wird. Durch ein Dehnstoffarbeitselement 8 ist der Schieber 4 in eine in Figur 1 dargestellte Mischbetriebsstellung oder in eine in Figur 2 dargestellte Kühlerbetriebsstellung bewegbar.

Das Dehnstoffarbeitselement 8 ist durch eine Führungstraverse 10 mit dem Schieber 4 verbunden. Die Verbindung zwischen der Führungstraverse 10 und dem Schieber 4 kann einstückig, stoffschlüssig und/oder formschlüssig ausgeführt sein. Die Führungstraverse 10 ist an einem Führungszapfen 12 geführt, der an einem Ende einen Lagerzapfen 14 aufweist, der in einem Lagerdurchgangsloch 15 des Gehäusekörpers 5 aufgenommen ist Ein Ende 16 des Lagerzapfens 14 ragt aus dem Lagerdurchgangsloch 15 des Gehäusekörpers 5 heraus und ist mit Hilfe einer Stützscheibe 17 formschlüssig, vorzugsweise durch eine Nietverbindung, an dem Gehäusekörper 5 befestigt. Zur statischen Abdichtung ist ein O-Ring 18 zwischen den Lagerzapfen 14 und dem Gehäusekörper 5 angeordnet.

An seinem anderen Ende weist der Führungszapfen 12 ein Sackloch 20 auf, in welchem eine Überhubfeder 22 angeordnet ist. Die Überhubfeder 22 ist in dem Sackloch 20 gegen ein Kolbengegenlager 24 vorgespannt. Auf seiner der Überhubfeder 22 abgewandten Seite ist das Kolbengegenlager 24 durch einen Kolben 25 des Dehnstoffarbeitselements 8 beaufschlagt, Das Kolbengegenlager 24 ist in axialer Richtung durch einen Sicherungsring 26 in dem Sackloch 20 gehalten.

Ein Ende 28 der Führungstraverse 10 umgreift das Dehnstoffarbeitselement 8, so dass sich dieses nicht von dem Führungszapfen 12 weg bewegen kann. Die Führungstraverse 10 weist einen axialen inneren Führungsabschnitt 30 auf, der im Wesentlichen die Gestalt eines geraden Kreiszylindermantels aufweist. Mit dem inneren Führungsabschnitt 30 ist die Führungstraverse 10 an einem äußeren Führungsabschnitt 32 des Führungszapfens 12 geführt. Der äußere Führungsabschnitt 32 des Führungszapfens 12 hat im Wesentlichen die Gestalt eines geraden Kreiszylindermantels und ist an seinem dem Dehnstoffarbeitselement 8 abgewandten Ende durch einen Bund 33 begrenzt. Der Bund 33 stellt einen Anschlag für die Rückstellfeder 6 dar, die in axialer Richtung zwischen dem Schieber 4 und dem Bund 33 des Führungszapfens 12 eingespannt ist.

Bei den in den Figuren 1 bis 4 dargestellten Ausfübrungsbeispielen umgreift der Schieber 4 die Rückstellfeder 6 mit einem Umfangsrand, der radial innen von dem Schieber 4 abgewinkeit ist. In der Nähe des abgewinkelten Umfangsrandes des Schiebers 4 ist die Führungstraverse 10 durch eine Vernietung 34 an dem Schieber 4 befestigt. Oberhalb des abgewinkelten Umfangsrands des Schiebers 4 ist an dem Gehäusekörper 5 ein Anschlag 36 ausgebildet, an welchem der Schieber 4 in seiner in Figur 3 dargestellten Kurzschlussbetriebsstellung anschlägt.

Ein weiterer Anschlag 35 ist in Figur 1 angedeutet und zum Beispiel an einem Gehäuseteil eines Kühlers oder eines Motors angebracht, der mit einer Öffnung zur Aufnahme des Längsschieber-Thermostatventils 1 ausgestattet ist. Im eingebauten Zustand des Längsschieber-Thermostatventils 1 stellt der Gehäusekörper 5 einen Deckel dar, der die Öffnung verschließt. Wenn sich der Schieber 4 aufgrund einer entsprechenden Ausdehnung des Dehnstoffarbeitselements 8 von dem Gehäusekörper 5 weg bewegt, dann wird diese Bewegung durch den Anschlag 35 begrenzt und der Kurzschlusskanal oder Bypasskanal wird somit verschlossen, wie man in Figur 2 sieht.

In Figur 1 befindet sich das Längsschieber-Therniostatventil 1 in einem Mjschbetriebszustand, in welchem der Schieber 4 zwischen den beiden Anschlägen 35 und 36 angeordnet ist. Der Schieber 4 ist sowohl von dem Anschlag 35 als auch von dem Anschlag 36 sowie einer axialen Dichtung 38 beabstandet. Das in den Figuren 1 bis 6 in verschiedenen Ansichten und Schaltstellungen dargestellte Längsschieber-Thermostatventil 1 ist als 3/2-Wegeventil mit drei Anschlüssen und zwei Schaltstellungen ausgeführt. Die beiden Schaltstellungen werden durch die Anschläge 35 und 36 definiert Das erfindungsgemaße Längsschieber-Thermostatventil 1 kann sowohl für eine Motoreintrittsregelung als auch für eine Motoraustrttsregetung verwendet werden. In Figur 1 ist durch einen Pfeil 41 angedeutet, dass Kühlmediuim bei einer Motoreintrittsregelung durch entsprechende Durchbrüche des Schiebers 4 von einem Kühler zu einem Motor gelangt. Durch einen weiteren Pfeil 42 ist angedeutet, dass in dem dargestellten Mischbetnebszustand auch Kühlmedium an dem Kühler vorbei aus einem Kurzschlusskanal oder Bypasskanal zum Motor gelangt Bei einer Motoraustrittsregelung gelangt das Kühlmedium vom Motor sowohl zum Kühler, wie durch einen Pfeil 43 angedeutet ist, als auch an dem Kühler vorbei in den Kurzschlusskanal oder Bypasskanal, wie durch einen weiteren Pfeil 44 angedeutet ist.

In Figur 2 ist das Längsschiebe-Thermostatventil 1 aus Figur 1 im Kühlerbetrieb dargestellt. Durch einen Pfeil 46 ist angedeutet, dass das Kühlmedium bei einer Motoreintrittsregelung vom Kühler zum Motor gelangt. Durch einen weiteren Pfeil 46 ist angedeutet, dass das Kühlmedium bei einer Motoraustritts regelung vom Motor zum Kühler gelangt. Der Bypasskanal am Kühler vorbei ist durch den Schieber 4 verschlossen.

In Figur 3 befindet sich der Schieber 4 in seiner Kurzschlussbetriebsstellung, in welcher die Verbindung zwischen Motor und Kühler durch den Schieber 4 unterbrochen ist Das Kühlmedium zirkuliert im Kurzschlussbetrieb am Kühler vorbei. Das in Figur 3 dargestellte Längsschieber-Thermostatventill 1 umfasst einen modifizierten Lagerzapfen 54, der an seinem dem Gehäusekörper 5 zugewandten Ende ein Sackloch 55 aufweist, das mit einem Innengewinde ausgestattet ist. In das Sackloch 55 ist eine Schraube 56 mit einem Schraubenkopf 57 eingeschraubt. Zwischen dem Schraubenkopf 57 und dem Gehäusekörper 5 ist eine Haltescheibe 58 eingespannt, durch welche der Führungszapfen 54 an dem Gehäusekörper 5 befestigt ist. Ansonsten entspricht das in Figur 3 dargestellte Ausführungsbeispiel dem in den Figuren 1 und 2 dargestellten Ausführungsbeispiel.

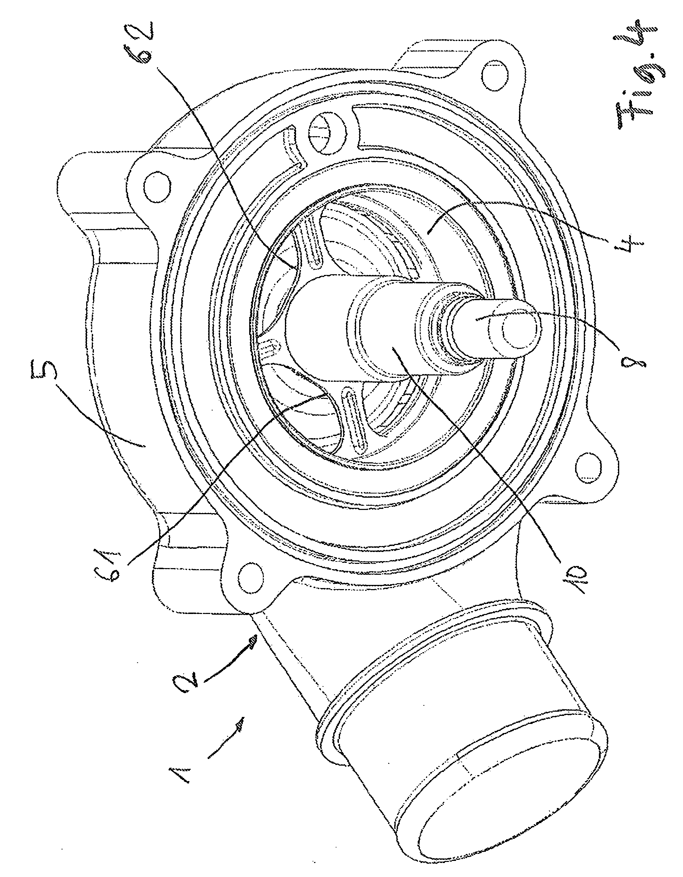

In Figur 4 ist das in den Figuren 1 und 2 beziehungsweise 3 dargestellte Längsschieber-Thermostatventil 1 perspektivisch schräg von unten mit Blick auf das Dehnstoffarbeltselement 8 dargestellt. In dieser Darstellung sieht man, dass der Schieber 4 Durchbrüche 61, 62 aufweist, die im Mischbetrieb und im Kühlerbetrieb einen Durchtritt des Kühlmediums ermöglichen.

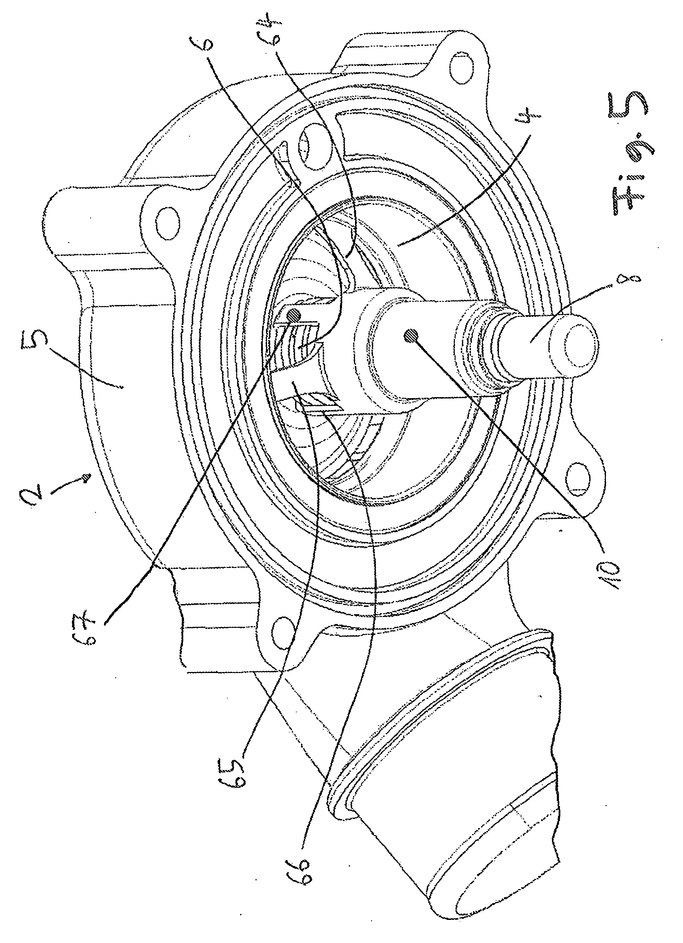

In Figur 5 ist ein weiteres Ausführungsbelspiel in der gleichen Perspektive wie in Figur 4 dargestellt, Bei diesem Ausführungsbeispiel ist die Führungstraverse 10 durch Verbindungsarme 64. 65 einstöckig mit dem Schieber 4 verbunden. Darüber hinaus gehen von der Fuhrungstraverse 10 Haltearme 66, 67 aus, welche die Rückstellfeder 6 an ihrem dem Gehäusekörper 5 zugewandten Ende umgreifen.

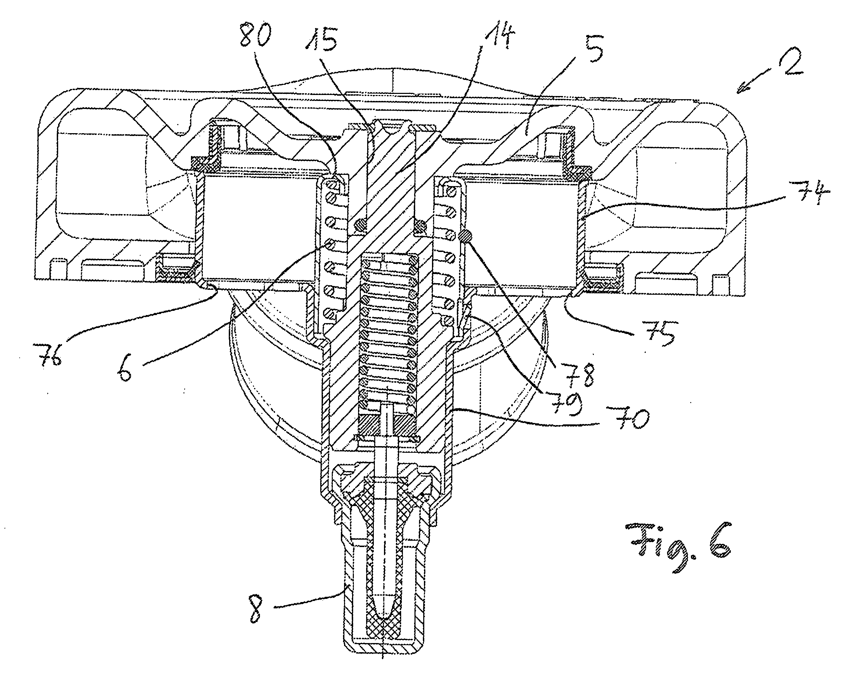

In Figur 6 ist ein ähnliches Ausführungsbeispiel wie in den Figuren 1 bis 5 mit einer Führungstraverse 70 dargestellt, die einstückig mit einem Schieber 74 verbunden ist. Der Schieber 74 ist, wie bei den vorangegangenen Ausführungsbeispielen, topfförmig ausgeführt, wobei der Topfboden von dem Gehäusekörper 5 beabstandet und der Schieber 74 zum Gehäusekörper hin offen ist. In dem Boden des Schiebers 74 sind Durchbrüche 75, 76 vorgesehen, die im Kühlerbetrieb und im Mischbetrieb den Durchtritt des Kühlmediums zum Kühler oder vom Kühler zum Motor ermöglichen.

An der Führungstraverse 70 ist ein Halteelement 78 befestigt, das vorzugsweise als Stanzteil ausgeführt ist. Das Halteelement 78 hat im Wesentlichen die Gestalt eines geraden Kreiszylindermantels, der an einem Ende mit Hilfe von Rastnasen 79 an der Führungstraverse 70 befestigt ist. An dem anderen Ende weist das Halteelement 78 einen abgewinkelten Randbereich 80 auf, der die Rückstellfeder 6 umgreift.

Bei der Montage der erfindungsgemäßen Thermostateinsatz-Baugruppe 2 wird die Überhubfeder 22 zusammen mit dem Kolbengegenlager 24 in dem Sackloch 20 des Führungszapfens 12 angeordnet. Zur besseren Führung ist der Führungszapfen 12 als Drehteil oder als Spritzgussteil aufgeführt. Bei dem Sicherungsring 26 handelt es sich vorzugsweise um ein Normteil, insbesondere nach DIN 472. Anschließend wird das Dehnstoffarbeitselement 8 mit einer leichten Verpressung in das Ende 28 der Führungstraverse 10 eingesetzt. Danach wird die Rückstellfeder 6 an den Bund 33 des Führungszapfens 12 angelegt und über die Montage des Schiebers 4 an der Führungstraverse 10, zum Beispiel durch Ausbildung der Vernietung 34, zwischen dem Schieber 4 und dem Bund 33 vorgespannt. Die Fütirungstraverse 10 ist vorzugsweise als Tiefziehteil ausgeführt.

Die erfindungsgemäße Thermostateinsatz-Baugruppe 2 hat den Vorteil, dass der komplette KraMuss nur in dieser Baugruppe wirkt. Der davon unabhängige Gehäusekörper 5 oder Gehäusedeckel kann aus einem kostengünstigeren Werkstoff, insbesondere einem Kunststoff, hergestellt werden. Die vormontierte Baugruppe 2 kann auf einfache Art und Weise an dem Gehäusekörper 5 montiert werden, indem der Lagerzapfen 14 des Führungszapfens 12 in das Lagerdurchgangsloch 15 eingesteckt wird, Anschießend wird das Ende 16 des Lagerzapfens 14, zum Beispiel durch einen kraftschlüssigen Taumelnietvorgang, an dem Gehäusekörper 5 befestigt. Durch Zwischenlegen der Stützscheibe 17 können Beschädigungen an dem Gehäusekörper 5 vermieden werden.

Die lösbare Anbringung des Führungszapfens 12 an dem Gehäusekörper 5 mit Hilfe der Schraube 56, dargestellt in Fig. 3, vereinfachte einen möglichen Austausch der Thermostateinsatz-Baugruppe 2. Im Bedarfsfall kann die Schraube 56 gelöst werden, um die Thermostateinsatz-Baugruppe 2 von dem Gehäusekörper 5 zu trennen. Die Nietverbindung am Ende 16 des Lagerzapfens 14, dargestellt in Fig. 1, 2 und 6, kann zum Beispiel durch Aufbohren gelöst werden.

Der Anschlag 36 hat den Vorteil, dass die axiale Dichtung 38 entlastet wird. Die axiale Dichtung 38 dient dazu, eine unerwünschte Leckage bei einer Motoreintrittsregelung vom Kühlmittelkühler und bei einer Motoraustrittsregelung zum Kühlmittelkühler zu verhindern. Ohne diese Kraftentlastung der axialen Dichtung 38 besteht die Gefahr, dass das Elastomer, aus dem die axiale Dichtung 38 vorzugsweise gebildet ist, durch die hohen Strömungsgeschwindigkeiten des Kürdmediums in Verbindung mit dem zeitlichen Setzen des Elastomers bei ständiger Kraftbeaufschlagung abgetragen wird, wodurch sich die Leckage vergrößert.

Das in Figur 5 dargestellte Ausführungsbeispiel mit den Verbindungsarmen 64, 65 und den Haltearmen 66, 67, die von der Führungstraverse 10 ausgehen, ist besonders bevorzugt. Die einteilige Führungstraverse 10 mit den Armen 64 bis 67 wird vorzugsweise in einem Tiefziehprozess als tiefgezogene, zylindrische Schiebereinheit hergestellt. Dabei werden zur Fixierung oder Halterung der Rückstellfeder 6 bevorzugt drei U-förmig umgebogene Hattearme 66, 67 durch Stanzen beim Tiefziehprozess hergestellt.

Bei der Herstellung der einteiligen Führungstraverse 10 werden die U-förmig umgebogenen Haltearme 66, 67 aufgespreizt und gestanzt, damit bei der Montage der vormontierten Thermostateinsatz-Baugruppe 2 die U-förmig umgebogenen Haltearme 66, 67 nicht während des Montageprozesses aufgespreizt werden müssen, Danach wird die Rückstellfeder 6 über die aufgespreizten U-förmig umgebogenen Haltearme 66, 67 auf der Gegenseite an den Bund 33 des Führungszapfens 12 der vormontierten Thermostateinsatz-Baugruppe 2 angelegt. Dann wird die Rückstellfeder 6 im Montageprozess auf Vorspannung gebracht. Anschließend werden die noch aufgespreizten U-förmig umgebogenen Haltearme 66, 67 außen am Umfang zusammengedrückt. Die Rückstellfeder kann danach zum formschlüssigen Einhängen in die U-förmig umgebogenen Haltearme 66, 67 wieder auf ihre gewünschte Einspannlänge entspannt werden, wobei die U-förmig umgebogenen Haltearme 66, 67 die Rückstellfeder 6 nur partiell aufnehmen oder umgreifen.

Durch die hülsenförmige, zylindrische, vorzugsweise tiefgezogene Führungstraverse 10; 70 wird eine komplette Ummantelung der innenliegenden Bauteile, wie zum Beispiel der Rückstellfeder 6, erreicht. Dadurch kann der Druckverlust in dem Längsschieber-Thermostatventil 1 reduziert und die Anströmung des Dehnstoffarbeitselements 8 verbessert werden, Dadurch kann die Regelcharakteristik für den kompletten Kühlkreislauf optimiert werden.

## Patentansprüche

1. Längsschieber-Thermostatventil in 3/2-Wegenventilbauweise für einen Kühlmittetkreislauf eines Verbrennungsmotors, mit einer Thermostateinsatz-Baugruppe (2), die einen topfförmigen Schieber (4;74) umfasst, der relativ zu einem Gehäusekörper (5) gegen die Wirkung einer Rückstellfeder (6) hin und her bewegbar geführt und durch eine Führungstraverse (10;70) mit einem Dehnstoffarbeitselement (8) gekoppelt ist, **dadurch gekennzeichnet, dass** die Führungstraverse (10;70) an einem separaten Führungszapfen (12) geführt ist, der an dem Gehäusekörper (5) befestigt ist.

2. Längsschleber-Thermostatventil nach Anspruch 1, **dadurch gekennzeichnet, dass** der Führungszapfen (12) als Drehteil oder als Spritzgussteil ausgeführt ist.

3. Längsschieber-Thermostatventil nach einem der vorhergehenden Ansprüche, **dadurch gekennzeichnet, dass** ein Ende des Führungszapfens (12) an dem Gehäusekörper (5) befestigt ist.

4. Längsschieber-Thermostatventil nach einem der vorhergehenden Ansprüche, **dadurch gekennzeichnet, dass** der Gehäusekörper (5) als Gehäusedeckel ausgeführt ist.

5. Längsschieber- Thermostatventil nach einem der vorhergehenden Ansprüche, **dadurch gekennzeichnet, dass** der Führungszapfen (12) in seinem dem Gehäusekörper (5) abgewandten Ende ein Sackloch (20) aufweist, in dem eine Überhubfeder (22) ausgenommen ist.

6. Längsschieber-Thermostatventil nach Anspruch 5, **dadurch gekennzeichnet, dass** die Überhubfeder (22) gegen ein Kolbengegenlager (24) für einen Kolben (25) des Dehnstoffarbeitselements (8) abgestützt ist.

7. Längsschieber-Thermostatventil nach Anspruch 6, **dadurch gekennzeichnet, dass** das Kolbengegenlager (24) durch einen Sicherungsring (26) in axialer Richtung in dem Sackloch (20) des Führungszapfens (12) gehalten ist.

8. Längsschieber-Thermostatventil nach einem der vorhergehenden Ansprüche, **dadurch gekennzeichnet, dass** die Führungstraverse (10;70) mit ihrem dem Gehäusekörper (5) abgewandten Ende (28) das Dehnstoffarbeitselement (8) umgreift.

9. Längsschieber-Thermostatventil nach einem der vorhergehenden Ansprüche, **dadurch gekennzeichnet, dass** die Führungstraverse (10;70) einen inneren Führungsabschnitt (30) aufweist, mit dem die Führungstraverse (10;70) an einem äußeren Führungsabschnitt (32) des Führungszapfens (12) geführt ist.

10. Längsschieber-Thermostatventil nach Anspruch 9, **dadurch gekennzeichnet, dass** sich der innere Führungsabschnitt (30) der Führungstraverse (10;70) zwischen dem Dehnstoffarbeitselement (8) und einem Bund (33) erstreckt, der an dem Führungszapfen (12) ausgebildet ist.

11. Längsschieber-Thermostatventil nach Anspruch 10, **dadurch gekennzeichnet, dass** die Rückstellfeder (6) zwischen dem Bund (33) des Führungszapfens (12) und dem Schieber (4;74) eingespannt ist.

12. Längsschieber-Thermostatventil nach einem der vorhergehenden Ansprüche, **dadurch gekennzeichnet, dass** der Führungszapfen (12) an seinem dem Gehäusekörper (5) zugewandten Ende einen Lagerzapfen (14) oder einen modifizierten Lagerzapfen (54) aufweist, der sich durch ein Lagerdurchgangsloch (15) erstreckt, das in dem Gehäusekörper (5) vorgesehen ist.

13. Längsschieber-Thermostatventil nach Anspruch 12, **dadurch gekennzeichnet, dass** die Schnittstelle zwischen dem Lagerzapfen (14) oder dem modifizierten Lagerzapfen (54) und dem Lagerdurchgangsloch (15) des Gehäusekörpers (5) durch einen O-Ring (18) abgedichtet ist.

14. Längsschieber-Thermostatventll nach einem der vorhergehenden Ansprüche, **dadurch gekennzeichnet, dass** die Führungstraverse (10) mit dem Schieber vernietet ist.

15. Längsschieber-Thermostatventil nach einem der Ansprüche 1 bis 13, **dadurch gekennzeichnet, dass** von der Führungstraverse (10) Haltearme (66,67) ausgehen, welche das dem Gehäusekörper (5) zugewandte Ende der Rückstellfeder (6) umgreifen.

## Claims

1. A linear spool thermostatic valve in a 3-port/2-way design for a coolant circuit of an internal combustion engine, with a thermostat insert assembly (2) comprising a cup-shaped spool (4; 74) which can be moved back and forth in a guided manner relative to a housing body (5) against the action of a return spring (6) and which is coupled with a flexible-material element (8) by means of a guiding traverse (10; 70), **characterized in that** the guiding traverse (10; 70) is guided on a separate guide pin (12) which is attached to the housing body (5).

2. The linear spool thermostatic valve according to claim 1, **characterized in that** the guide pin (12) is formed as a turned part or as an injection-molded part.

3. The linear spool thermostatic valve according to one of the preceding claims, **characterized in that** one end of the guide pin (12) is attached to the housing body (5).

4. The linear spool thermostatic valve according to one of the preceding claims, **characterized in that** the housing body (5) is designed as a housing cover.

5. The linear spool thermostatic valve according to one of the preceding claims, **characterized in that** the guide pin (12) has a blind hole (20) in its end facing away from the housing body (5) in which an over-travel spring (22) is accommodated.

6. The linear spool thermostatic valve according to claim 5, **characterized in that** the over-travel spring (22) is supported against a piston end support (24) for a piston (25) of the flexible-material element (8).

7. The linear spool thermostatic valve according to claim 6, **characterized in that** the piston end support (24) is held in the axial direction in the blind hole (20) of the guide pin (12) by a retaining ring (26).

8. The linear spool thermostatic valve according to one of the preceding claims, **characterized in that** the end (28) of the guiding traverse (10; 70) facing away from the housing body (5) surrounds the flexible-material element (8).

9. The linear spool thermostatic valve according to one of the preceding claims, **characterized in that** the guiding traverse (10; 70) has an inner guide section (30) which guides the guiding traverse (10; 70) along an outer guide section (32) of the guide pin (12).

10. The linear spool thermostatic valve according to claim 9, **characterized in that** the inner guide section (30) of the guiding traverse (10; 70) extends from the flexible-material element (8) to a collar (33) which is formed on the guide pin (12).

11. The linear spool thermostatic valve according to claim 10, **characterized in that** the return spring (6) is fixed between the collar (33) of the guide pin (12) and the spool (4; 74).

12. The linear spool thermostatic valve according to one of the preceding claims, **characterized in that** the guide pin (12) has a bearing pin (14) or a modified bearing pin (54) at its end facing the housing body (5) which extends through a bearing through hole (15) which is provided in the housing body (5).

13. The linear spool thermostatic valve according to claim 12, **characterized in that** the interface between the bearing pin (14) or the modified bearing pin (54) and the bearing through hole (15) of the housing body (5) is sealed by an 0-ring (18).

14. The linear spool thermostatic valve according to one of the preceding claims, **characterized in that** the guiding traverse (10) is riveted to the spool.

15. The linear spool thermostatic valve according to one of the claims 1 to 13, **characterized in that** supporting arms (66, 67) extend from the guiding traverse (10) which surround the end of the return spring (6) facing the housing body (5).

## Revendications

1. Soupape thermostatique à coulisseau longitudinal du type à 3/2 voies pour un circuit de liquide de refroidissement d'un moteur à combustion interne, ladite soupape thermostatique comprenant un module de thermostat rapporté (2) qui comprend un coulisseau (4 ; 74), en forme de pot, qui est guidé de façon mobile, par va-et-vient, par rapport à un corps de carter (5), en s'opposant à l'action d'un ressort de rappel (6), et est couplé, par une traverse de guidage (10 ; 70), à un élément de travail en matériau dilatable (8), **caractérisée en ce que** la traverse de guidage (10 ; 70) est guidée au niveau d'un tourillon de guidage distinct (12) qui est fixé sur le corps de carter (5).

2. Soupape thermostatique à coulisseau longitudinal selon la revendication 1, **caractérisée en ce que** le tourillon de guidage (12) est conçu comme une pièce pivotante ou comme une pièce moulée par injection.

3. Soupape thermostatique à coulisseau longitudinal selon l'une ou l'autre des revendications précédentes, **caractérisée en ce qu'**une extrémité du tourillon de guidage (12) est fixée sur le corps de carter (5).

4. Soupape thermostatique à coulisseau longitudinal selon l'une quelconque des revendications précédentes, **caractérisée en ce que** le corps de carter (5) est conçu comme un couvercle de carter.

5. Soupape thermostatique à coulisseau longitudinal selon l'une quelconque des revendications précédentes, **caractérisée en ce que** le tourillon de guidage (12) présente, dans son extrémité placée à l'opposé du corps de carter (5), un trou borgne (20) dans lequel est logé un ressort de dépassement de course (22).

6. Soupape thermostatique à coulisseau longitudinal selon la revendication 5, **caractérisée en ce que** le ressort de dépassement de course (22) est supporté contre un palier d'appui de piston (24) prévu pour un piston (25) de l'élément de travail en matériau dilatable (8).

7. Soupape thermostatique à coulisseau longitudinal selon la revendication 6, **caractérisée en ce que** le palier d'appui de piston (24) est fixé, dans la direction axiale, dans le trou borgne (20) du tourillon de guidage (12), par un circlip (26).

8. Soupape thermostatique à coulisseau longitudinal selon l'une quelconque des revendications précédentes, **caractérisée en ce que** la traverse de guidage (10 ; 70) entoure l'élément de travail en matériau dilatable (8), par son extrémité (28) placée à l'opposé du corps de carter (5).

9. Soupape thermostatique à coulisseau longitudinal selon l'une quelconque des revendications précédentes, **caractérisée en ce que** la traverse de guidage (10 ; 70) présente une partie de guidage intérieure (30) avec laquelle la traverse de guidage (10 ; 70) est guidée sur une partie de guidage extérieure (32) du tourillon de guidage (12).

10. Soupape thermostatique à coulisseau longitudinal selon la revendication 9, **caractérisée en ce que** la partie de guidage intérieure (30) de la traverse de guidage (10 ; 70) s'étend entre l'élément de travail en matériau dilatable (8) et un bord (33) qui est configuré sur le tourillon de guidage (12).

11. Soupape thermostatique à coulisseau longitudinal selon la revendication 10, **caractérisée en ce que** le ressort de rappel (6) est encastré entre le bord (33) du tourillon de guidage (12) et le coulisseau (4 ; 74).

12. Soupape thermostatique à coulisseau longitudinal selon l'une quelconque des revendications précédentes, **caractérisée en ce que** le tourillon de guidage (12) présente, au niveau de son extrémité tournée vers le corps de carter (5), un tourillon formant palier (14) ou un tourillon modifié (54) formant palier qui s'étend à travers un trou de passage de palier (15) qui est prévu dans le corps de carter (5).

13. Soupape thermostatique à coulisseau longitudinal selon la revendication 12, **caractérisée en ce que** l'interface entre le tourillon formant palier (14) ou le tourillon modifié (54) formant palier, et le trou de passage de palier (15) du corps de carter (5), est rendue étanche par un joint torique (18).

14. Soupape thermostatique à coulisseau longitudinal selon l'une quelconque des revendications précédentes, **caractérisée en ce que** la traverse de guidage (10) est assemblée avec le coulisseau par rivetage.

15. Soupape thermostatique à coulisseau longitudinal selon l'une quelconque des revendications 1 à 13, **caractérisée en ce que** des bras de retenue (66, 67) partent de la traverse de guidage (10), lesquels bras de retenue entourent l'extrémité du ressort de rappel (6), tournée vers le corps de carter (5).
